# EUROPEAN PATENT SPECIFICATION

(11) **EP 0 959 285 B1**
(45) Date of publication and mention of the grant of the patent: **11.09.2002**
(21) Application number: 99109979.7
(22) Date of filing: 21.05.1999
(51) Int. Cl.: F16L 11/08, B32B 1/08, B32B 25/10

(54) **Composite hose for the conveying of refrigerant**
Flexibler, mehrschichtiger Kühlmittelförderschlauch
Tuyau composite souple pour le transport de réfrigérant

(30) Priority: 23.05.1998 JP 15842598
(43) Date of publication of application: 24.11.1999
(73) Proprietor: BRIDGESTONE CORPORATION, Tokyo 104-0031 (JP)
(72) Inventor: Kushige, Takakazu c/o Bridgestone Corporation, Tokyo 104-0031 (JP)
(74) Representative: Dreiss, Fuhlendorf, Steimle & Becker

(56) References cited:
- US-A- 4 469 729
- US-A- 4 585 035
- US-A- 4 759 388
- US-A- 4 898 212
- DATABASE WPI Section Ch, Week 9207 Derwent Publications Ltd., London, GB; Class A23, AN 92-052236 XP002113440 & JP 03 294537 A (TORAY IND INC), 25 December 1991 (1991-12-25)
- DATABASE WPI Section Ch, Week 8302 Derwent Publications Ltd., London, GB; Class A28, AN 83-03283K XP002113441 & JP 57 193359 A (TEIJIN LTD), 27 November 1982 (1982-11-27)

## Description

### BACKGROUND OF THE INVENTION

### Field of the Invention

The present invention relates to a composite hose for the conveying of refrigerant which is formed by combining a resin layer, a rubber layer, and a reinforcing layer.

### Description of the Related Art

A composite hose has, as the innermost layer thereof, an inner surface resin layer made of nylon or the like. An inner tube rubber layer, a reinforcing layer and an outer covering rubber layer are layered successively at the outer surface of this inner surface resin layer. Such a composite hose has excellent resistance to refrigerant permeation, resistance to water permeation, heat resistance and durability, and is widely used mainly as a hose for the conveying of refrigerant in vehicles. US 4585035, US 4898212 and US 4759 388 disclose composite reinforced hoses.

In recent years, engine rooms of vehicles have become hotter due to the engine room being made more compact. Further, reduction of the emission of gasses contributing to global warming has become more and more desirable. Thus, the need has arisen to suppress even more the amount of refrigerant permeating through the hose in a vehicle. Moreover, a hose having excellent flexibility has been desired in order to reduce vibration sounds in the passenger compartment of a vehicle. Thus, a hose having an inner surface resin layer has actually been provided as a hose for the conveying of refrigerant in vehicles which achieves both a reduction in the emissions in a high temperature environment and excellent flexibility.

However, in such hoses for the conveying of refrigerant which have actually been provided until now, in order to achieve the desired reduction in emissions, the hard inner surface resin layer (barrier layer) has had to be made thick, which results in flexibility having to be sacrificed. Further, in order to improve the heat resistance and durability to address the increase in temperatures within the engine room which has become more marked in recent years, harder structural materials may be used, but this too results in flexibility having to be sacrificed. Moreover, in order to improve the fatigue resistance, reduce the amount of refrigerant which permeates through, and improve the heat resistance and durability by increasing the modulus of elasticity of the reinforcing filaments used in the hose, aramid has been used as a material for the reinforcing filaments. However, the drawback of using aramid is that it is expensive.

### SUMMARY OF THE INVENTION

The object of the present invention is to provide at a low cost a composite hose which on the whole is extremely flexible despite having an inner surface resin layer barrier layer, and through which there is little permeation of refrigerant, and which has excellent heat resistance and durability.

In order to overcome the aforementioned drawbacks, the present invention provides a composite hose for the conveying of refrigerant in which an inner surface resin layer, an inner tube rubber layer, a reinforcing layer, and an outer cover rubber layer are layered in that order from the inner side, wherein the material of the reinforcing layer is polyethylene naphthalate filaments.

### BRIEF DESCRIPTION OF THE DRAWINGS

Fig. 1 is a perspective view of a composite hose for the conveying of refrigerant of an embodiment of the present invention.
Fig. 2 is a perspective view of a composite hose for the conveying of refrigerant of another embodiment of the present invention.

### DESCRIPTION OF THE PREFERRED EMBODIMENTS

The composite hose for the conveying of refrigerant of the present invention has, as the innermost layer thereof, an inner surface resin layer whose main component is polyamide or the like. This inner surface resin layer mainly functions as a barrier which suppresses the permeation of refrigerant. In general, the harder the resin, or, the thicker the resin layer, the better the barrier function for suppressing refrigerant permeation. However, the thickness of the resin layer must be determined by taking the hardness of the resin material into consideration in order to not adversely affect the flexibility of the hose.

Namely, the material used for the inner surface resin layer is selected in consideration of refrigerant permeation resistance, heat resistance, oil resistance, fatigue resistance, as well as flexibility. For example, 6-nylon or a nylon alloy material in which 6-nylon is the main component and a polyolefin is added thereto is preferable. If necessary, 12-nylon may be used or a 6,6 copolymer nylon may be used. Further, resins other than nylon, such as fluorine resins, may be used. The thickness of the resin layer is usually in a range of 0.05 to 0.50 mm, and is preferably 0.1 to 0.2 mm.

An adhesive layer is provided on the inner surface resin layer in order to strengthen the adhesion between the inner surface resin layer and the inner tube rubber. However, if the inner surface resin layer is formed of a compound which obtains sufficient adhesive strength even without an adhesive layer, there is no need to provide an adhesive layer. Further, the inner surface resin layer may be subjected to a surface treatment such as corona discharge treatment or the like.

The layer on the inner surface resin layer is the inner tube rubber layer which supports the internal pressure, suppresses permeation of refrigerant, and reduces the penetration of moisture from the outside. The material for and the thickness of the inner tube layer are selected in consideration of the permeation properties, the flexibility and the like. Further, the thicker the rubber layer, the better the property of suppressing permeation of moisture.

The material of the inner tube rubber layer is selected in consideration of water permeation resistance, heat resistance and flexibility. Usually, the fluid flowing therein is the refrigerant HFC-134a (1, 1, 1, 2-tetrafluoroethane) and PAG (poly alkylene glycol) which easily absorb moisture. Therefore, IIR is preferably used in consideration of the water permeation resistance because of its good ability to prevent moisture from penetrating into the air conditioning system. EPDM and the like are other rubbers which have good water permeation resistance, and thus may be used. Further, if the fluid flowing within the hose is a gas other than HFC-134a (e.g., CO₂, propane gas) and it is not overly important to consider water permeation resistance, NBR, CR and the like may be used. The thickness of the inner tube rubber layer is usually in the range of 0.5 to 2.5 mm, and is preferably 0.8 to 1.5 mm.

Reinforcing filaments are wound in a spiral around the exterior of the inner tube rubber layer so as to form a reinforcing layer. This reinforcing layer supports the pressure of the internal fluid and suppresses variations in the internal diameter of the hose at the time internal pressure is applied to the hose. The material used for the reinforcing filament must have a high modulus of elasticity, and must have excellent fatigue resistance and heat resistance. The thickness of the reinforcing filament and the number of wound filaments are determined in consideration of the degree of safety in light of the actual pressure to be used.

The material used for the reinforcing layer must be heat-resistant, fatigue resistant, very strong, and have a high modulus of elasticity. In the present invention, polyethylene naphthalate (PEN) filaments are used in light of these requisite properties. Compared with PET filaments, vinylon filaments, nylon filaments and the like which are usually used, polyethylene naphthalate filaments have a high modulus of elasticity and excellent heat resistance. Namely, the modulus of elasticity of PEN filaments under 2% strain is 3.3 g/denier. For PET, this value is 1.1, and for nylon, this value is 0.8. Thus, the modulus of elasticity of PEN is markedly high. Aramid filaments have excellent modulus of elasticity (16.1), break strength, and heat resistance, but are expensive, and the fatigue resistance thereof when subjected to compression deteriorates extremely. Thus, aramid filaments are not used in the present invention.

The thickness of the PEN filament used in the present invention is usually in the range of 500 to 7000 deniers, and is preferably 2000 to 5000 deniers. The number of reinforcing filaments depends on the diameter of the hose, but usually, per reinforcing layer, 8 to 60 filaments are used, and 12 to 36 filaments are preferably used. A hose for the conveying of refrigerant usually has an internal diameter of about 6 to 26 mm and an external diameter of about 12 to 36 mm. The pressure used is about 0.5 to 3.5 MPa, and the break pressure is about 8 to 35 MPa. If designing is carried out so as to satisfy these conditions, the preferable thickness and the preferable count of the reinforcing filaments can be determined.

In the present invention, there are two or more reinforcing layers which have a spiral structure, and spirals of adjacent layers are in opposite directions. Intermediate rubber layers may be provided between the respective reinforcing layers if needed. Further, a wound underlayer may be provided between the reinforcing layer and the intermediate rubber layer. Moreover, if needed, a filament or filaments may be provided at the outer peripheral surface of the reinforcing layer to fix the filaments of the reinforcing layer.

If the modulus of elasticity of the reinforcing filament is high, there is less change in the inner diameter of the hose when pressure is applied thereto than in a case in which a filament having a low modulus of elasticity is used. Thus, under the same environmental conditions, the internal diameter of a hose with reinforcing filament of a high modulus of elasticity is relatively smaller, and as a result, the amount of refrigerant permeating therethrough is reduced. Accordingly, the inner surface resin layer can be made more thin than conventional inner surface resin layers, and the flexibility can be improved. Moreover, because the amount of change in the internal diameter with respect to repeated application of internal pressure is small, the stress applied to the inner surface resin material and the like is small, and thus, the fatigue resistance improves.

The outermost layer, which is provided on the reinforcing layer, is the outer cover rubber which mainly functions to protect the reinforcing layer. In selecting the material and thickness of the outer cover rubber, ozone crack resistance, heat resistance, oil resistance, flexibility, external appearance and the like are considered. It is usually good to use EPDM. CR, IIR, SBR and the like may also be used. The thickness of the outer cover rubber is usually in the range of 0.5 to 2.5 mm, and is preferably 0.8 to 1.5 mm. If needed, pricking holes for the release of gas may be provided in the surface of the outer cover rubber.

By providing a wound underlayer on top of the relatively flexible inner tube rubber layer, the firm base is established, the lay of the reinforcing layer thereon is improved, and the ability to withstand repeated application of pressure at high temperatures can be improved without adversely affecting the other properties.

Organic fiber materials such as nylon, PET, vinylon, aramid, PEN, aromatic polyester, and the like may be used for the material for the wound underlayer. The thickness of the filament used in the wound underlayer is usually in the range of 300 to 4000 deniers. More specifically, thicknesses of 500 to 2000 deniers are often used. The number of wound underlayer filaments differs in accordance with the diameter of the hose, but per layer, 4 to 36 filaments are usually used, and preferably 8 to 24 filaments are used.

The above-described composite hose for the conveying of automobile refrigerant is reinforced by polyethylene naphthalate fiber filaments which have a high modulus of elasticity and are inexpensive. Thus, even if the inner surface resin barrier layer is thin, a composite hose which has a low amount of refrigerant permeation and which has excellent heat resistance, durability, and flexibility can be provided at a low cost so as to achieve the intended object.

### EXAMPLE

The composite hose for the conveying of refrigerant of the present invention will be described in further detail hereinafter by the following example.

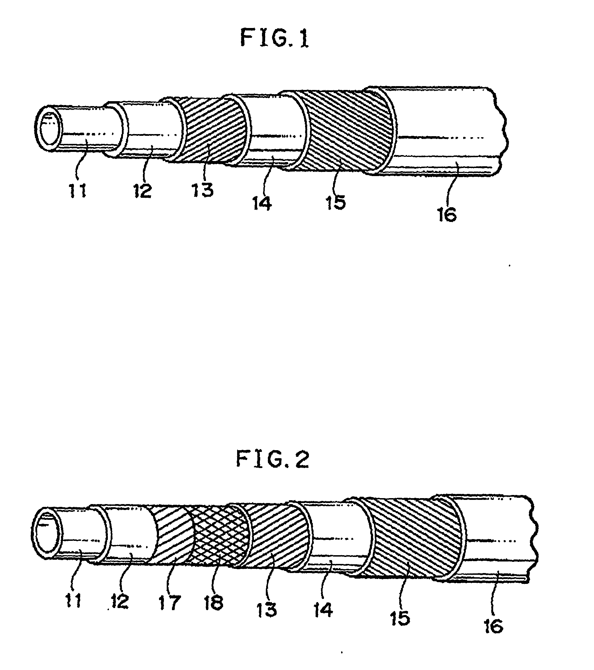

Fig. 1 illustrates a first embodiment of the composite hose for the conveying of refrigerant of the present invention. In Fig. 1, reference numeral 11 is an inner surface resin layer which, in consideration of refrigerant permeation resistance, heat resistance, oil resistance, fatigue resistance and flexibility, is made from a nylon alloy material in which polyolefin is added to the main component of 6-nylon. The thickness of the resin layer 11 is 120 µm

Reference numeral 12 is an inner tube rubber layer. The material therefor is selected in consideration of water permeation resistance, heat resistance, and flexibility. In the present embodiment, the fluid flowing through the hose is the refrigerant HFC-134a and PAG which easily absorb moisture. IIR is used as the material for the inner tube rubber layer because of its good ability to prevent moisture from penetrating into the air conditioning system.

Reference numerals 13 and 15 are reinforcing layers. In the present embodiment, there are these two reinforcing layers each having a spiral structure, and an intermediate rubber layer 14 is provided therebetween. In consideration of the properties required for such reinforcing layers, polyethylene naphthalate (PEN) filaments are used.

Reference numeral 16 is an outside cover rubber layer. In the present embodiment, EPDM is used as the material therefor in consideration of heat resistance, ozone crack resistance and flexibility. In the present embodiment, pricking holes for allowing gas to escape are provided in the reinforcing layers.

The thickness of the inner tube rubber 12 is 1.5 mm. The thickness of the PEN filaments of the reinforcing layers 13, 15 is 4000 deniers, and the count is 22 for each reinforcing layer 13, 15. The thickness of the outer cover rubber layer 16 is 1.2 mm. The intermediate rubber layer 14 is formed from an IIR rubber.

Fig. 2 illustrates a second embodiment of the composite hose for the conveying of refrigerant according to the present invention.

The second embodiment differs from the first embodiment in that, in the second embodiment, wound underlayers 17, 18 are provided between the inner tube rubber layer 12 and the reinforcing layer 13. The inner surface resin layer, the inner tube rubber layer, the reinforcing layers, the intermediate rubber layer, and the outer cover rubber layer are the same as those of the first embodiment. Nylon filaments are used for the wound underlayers 17, 18. The thickness of the nylon filaments of the wound underlayers 17, 18 is 1000 deniers, and each wound underlayer 17, 18 has a count of 12.

These composite hoses for the conveying of refrigerant were subjected to various tests and evaluated. The results are listed in Table 1. The dimensions of the respective hoses listed in Table 1 are all the same (inner diameter: 11 mm; outer diameter: 19 mm), and all of the conditions are the same except for the materials of the reinforcing filaments.

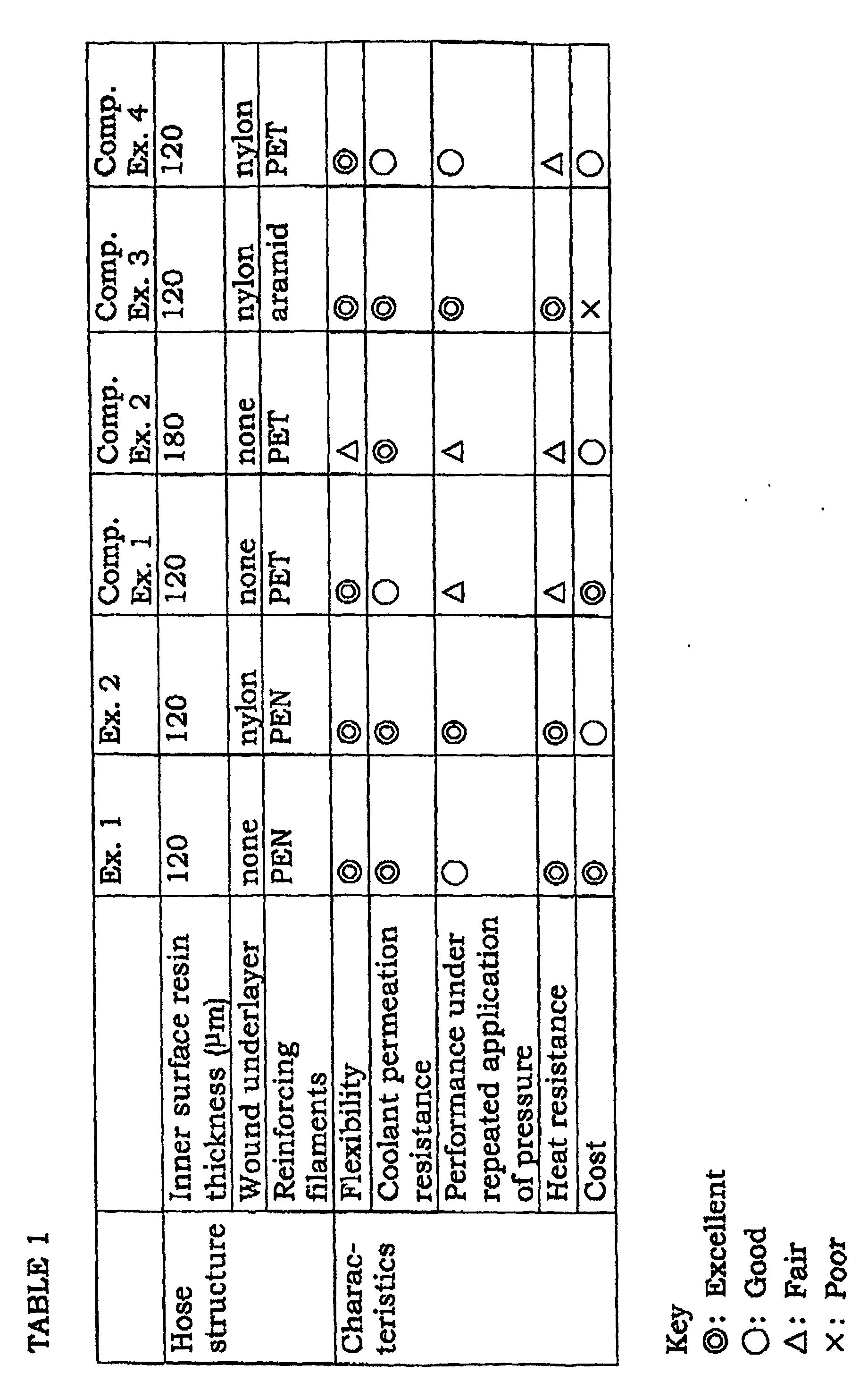

### Examples 1 and 2

As can be seen from the results of evaluation in Table 1, Examples 1 and 2 received ratings of good (○) or excellent (ⓞ) in all categories.

### Comparative Examples 1 and 2

In Comparative Example 1 which used PET filaments, when the number of times test was performed was increased, the performance under repeated application of pressure and the heat resistance were not satisfactory, and the refrigerant permeation resistance was also slightly inferior.

In Comparative Example 2, the inner surface resin layer was made thick. The refrigerant permeation resistance was the same as that of the Examples, but flexibility was sacrificed.

### Comparative Examples 3 and 4

There were no problems with the respective performances of Comparative Example 3 which included wound underlayers and whose reinforcing filaments were aramid. However, Comparative Example 3 is expensive.

In Comparative Example 4, which included wound underlayers and whose reinforcing filaments were PET, heat resistance was slightly inferior.

The respective tests were carried out under the following conditions.

### (1) Flexibility

The load at the time the hose was wound around an R100 mandrel was measured.

### (2) Refrigerant Permeation Resistance

The hose was filled with 0.6 g/cm³ of refrigerant (HFC-134a) with respect to the internal volume of the hose, and was left for 96 hours in a tank kept at a constant temperature of 100°C. The change between the load at the 24th hour and the load at the 96th hour after the test had begun was measured, and this value was used as the amount of refrigerant permeation.

### (3) Performance under Repeated Application of Pressure

With both the ambient temperature and the oil temperature set to 140°C, pressure of 5.30 MPa was applied in 30 cycles per minute. The number of times until the hose broke was measured.

### (4) Heat Resistance

The hose assembly was placed in a tank kept at a constant temperature of 160°C. Each time a predetermined period of time elapsed, the hose was removed from the tank, was cooled, was placed in water, and a pressure of 3.53 MPa was applied thereto by nitrogen. It was observed whether there were any air leaks, and the time until an air leak occurred was used as the basis for evaluation.

### (5) Cost

Cost was evaluated by considering the produceability thereof and the like.

## Claims

1. A composite hose for the conveying of refrigerant wherein an inner surface resin layer, an inner tube rubber layer, a reinforcing layer formed of polyethylene naphthalate filaments, and an outer cover rubber layer are layered in that order from an inner side.

2. A composite hose for the conveying of refrigerant according to claim 1, wherein the reinforcing layer comprises two or more layers which are each a spiral structure.

3. A composite hose for the conveying of refrigerant according to claim 2, wherein the number of polyethylene naphthalate filaments used in one layer of the reinforcing layer is from 8 to 60.

4. A composite hose for the conveying of refrigerant according to claim 2 or 3, wherein spirals of adjacent layers of the reinforcing layer are in opposite directions.

5. A composite hose for the conveying of refrigerant according to any of claims 2 through 4, wherein an intermediate rubber layer is provided between the respective layers of the reinforcing layer.

6. A composite hose for the conveying of refrigerant according to any of claims 1 through 5, wherein the thickness of the polyethylene naphthalate filament is 500 to 7000 deniers.

7. A composite hose for the conveying of refrigerant according to any of claims 1 through 6, wherein the inner surface resin layer is formed from polyamide.

8. A composite hose for the conveying of refrigerant according to claim 7, wherein the inner surface resin layer is formed from nylon.

## Patentansprüche

1. Verbundschlauch zur Beförderung von Kühlmittel, bei welchem eine Innenoberfläche-Harzschicht, eine Innenrohr-Gummischicht, eine aus Polyethylennaphtalat-Fäden geformte Verstärkungsschicht, und eine Außenmantel-Gummischicht in dieser Reihenfolge von der Innenseite her geschichtet sind.

2. Verbundschlauch zur Beförderung von Kühlmittel nach Anspruch 1, bei welchem die Verstärkungsschicht zwei oder mehr Schichten umfasst, die jeweils eine Spiralstruktur aufweisen.

3. Verbundschlauch zur Beförderung von Kühlmittel nach Anspruch 2, bei welchem die Anzahl der in einer Schicht der Verstärkungsschicht verwendeten Polyethylennaphtalat-Fäden 8 bis 60 beträgt.

4. Verbundschlauch zur Beförderung von Kühlmittel nach Anspruch 2 oder 3, bei welchem die Spiralen von angrenzenden Schichten der Verstärkungsschicht in entgegengesetzten Richtungen verlaufen.

5. Verbundschlauch zur Beförderung von Kühlmittel nach einem der Ansprüche 2 bis 4, bei welchem eine Zwischen-Gummischicht zwischen den jeweiligen Schichten der Verstärkungsschicht angeordnet ist.

6. Verbundschlauch zur Beförderung von Kühlmittel nach einem der Ansprüche 1 bis 5, bei welchem die Dicke der Polyethylennaphtalat-Fäden von 500 bis 7000 Dernier beträgt.

7. Verbundschlauch zur Beförderung von Kühlmittel nach einem der Ansprüche 1 bis 6, bei welchem die Innenoberfläche-Harzschicht aus Polyamid geformt ist.

8. Verbundschlauch zur Beförderung von Kühlmittel nach Anspruch 7, bei welchem die Innenoberfläche-Harzschicht aus Nylon geformt ist.

## Revendications

1. Tuyau composite souple pour le transport de réfrigérant, **caractérisé en ce que** une couche interne de résine, une couche tubulaire interne en caoutchouc, une couche de renfort constituées de filaments de polyéthylène naphthalate, et une couche extérieure couvrante en caoutchouc sont superposées dans cet ordre à partir de l'intérieur.

2. Tuyau composite souple pour le transport de réfrigérant selon la revendication 1, **caractérisé en ce que** la couche de renfort comprend deux couches ou plus qui ont chacune une structure en spirale.

3. Tuyau composite souple pour le transport de réfrigérant selon la revendication 2, **caractérisé en ce que** le nombre de filaments de polyéthylène naphthalate utilisé dans une couche de la couche de renfort varie de 8 à 60.

4. Tuyau composite souple pour le transport de réfrigérant selon la revendication 2 ou 3, **caractérisé en ce que** les spirales des couches adjacentes de la couche de renfort sont dans des directions opposées.

5. Tuyau composite souple pour le transport de réfrigérant selon l'une des revendications 2 à 4, **caractérisé en ce que** une couche intermédiaire en caoutchouc est prévue entre les couches respectives de la couche de renfort.

6. Tuyau composite souple pour le transport de réfrigérant selon l'une des revendications 1 à 5, **caractérisé en ce que** la finesse du filament de polyéthylène naphthalate varie de 500 à 7000 deniers.

7. Tuyau composite souple pour le transport de réfrigérant selon l'une des revendications 1 à 6, **caractérisé en ce que** la couche interne de résine est en polyamide.

8. Tuyau composite souple pour le transport de réfrigérant selon la revendication 7, **caractérisé en ce que** la couche interne de résine est en nylon.
